# DEMANDE DE BREVET EUROPEEN

(11) **EP 1 184 156 A1**
(43) Date de publication de la demande: **06.03.2002**
(21) Numéro de dépôt: 01402243.8
(22) Date de dépôt: 29.08.2001
(51) Int. Cl.: B29C 67/00, B29C 33/52

(54) **Composition de mousse photopolymérisable, procédé d'obtention de pieces tridimensionnelles par prototypage rapide, dispositif de mise en oeuvre, piece obtenue et utilisation**

(30) Priorité: 01.09.2000 FR 0011170
(71) Demandeur: Optoform Sarl Procedes de Prototypage Rapide, 54425 Pulnoy (FR)
(72) Inventeur: Allanic, André-Luc, 54000 Nancy (FR); Schaeffer, Philippe, 54700 Atton (FR)
(74) Mandataire: Laget, Jean-Loup

(57) **Abrégé**

L'invention concerne une composition de mousse photopolymérisable destinée à être utilisée dans un procédé de prototypage, un procédé d'obtention de pièces tridimensionnelles par un procédé de prototypage rapide à partir de ladite composition, un dispositif de mise en oeuvre dudit procédé, une pièce obtenue à partir dudit procédé et une utilisation d'une telle pièce. La composition de mousse se caractérise en ce qu'elle comprend :
- une partie liquide ou pâteuse comprenant au moins 35 % en volume de matériau photopolymérisable comprenant au moins une résine photosensible et au moins un photoamorceur et de 0 à 65 % en volume de charge(s) pulvérulente(s) et/ou d'adjuvant(s) et
- une partie gazeuse sous la forme d'une dispersion de gaz dans ladite partie liquide ou pâteuse, le gaz étant sous forme de bulles dans une proportion de 10 à 95 % en volume par rapport au volume de la composition.

## Description

La présente invention concerne une composition de mousse photopolymérisable, un procédé d'obtention de pièces tridimensionnelles par un procédé de prototypage rapide à partir de ladite composition, un dispositif de mise en oeuvre dudit procédé, une pièce obtenue à partir dudit procédé et une utilisation d'une telle pièce.

Il est connu de réaliser des pièces tridimensionnelles de formes complexes en des temps très compétitifs par des procédés de prototypage rapide consistant à transformer des couches successives d'une matière première d'un premier état en un second état, par la répétition d'un cycle comprenant une étape de recouvrement des parties transformées par de la matière première non encore transformée à l'aide d'un dispositif pour effectuer le recouvrement et une étape de transformation de la matière première dans au moins une partie d'un champ de travail grâce à un dispositif induisant la transformation.

Les procédés de prototypage rapide mettent en oeuvre notamment des machines de stéréolithographie utilisant une matière liquide photosensible susceptible d'être réticulée ou polymérisée par illumination, par un balayage laser ultraviolet par exemple, des machines dites de frittage de poudre, utilisant une matière première sous forme de poudre, ladite poudre étant susceptible d'être localement agglomérée par effet thermique, par un balayage laser infrarouge par exemple, des machines utilisant des filaments déposés à chaud ou découpant des feuilles, ou encore utilisant des pâtes photosensibles ne se déformant pas sous l'action de la gravité sans pour autant être solides, susceptibles d'être réticulées ou polymérisées par illumination, par un balayage laser ultraviolet par exemple.

Les bulles éventuellement présentes dans les liquides ou les pâtes photosensibles sont considérées comme des inconvénients qu'il s'agit de minimiser. La présence de bulles dans les machines de stéréolithographie est préjudiciable car les bulles risquent d'être piégées dans la pièce durant sa fabrication, ce qui conduit à des pièces présentant des trous en surface (défaut d'aspect) ou au coeur (défaut de propriétés mécaniques et optiques). Dans les machines à pâtes, le problème sur les pièces finales est identique, mais la viscosité souvent très importante des pâtes fait que les bulles n'ont aucune chance de disparaître spontanément au cours du temps. Pour remédier à ces problèmes, les fabricants de liquides ou de pâtes pour machine de prototypage rapide sont amenés à modifier leur composition pour minimiser l'apparition de bulles. Par exemple, la résine commerciale SOMOS 6100, utilisée dans des machines de stéréolithographie, a été remplacée par la résine SOMOS 7100, ayant des propriétés similaires, mais présentée comme comportant nettement moins de bulles que la SOMOS 6100.

Un besoin croissant du prototypage rapide est d'obtenir des pièces de faible coût obtenues très rapidement par des machines compatibles avec un environnement de bureau. Or la matière première, notamment les résines photosensibles appelées également ci-après résines photopolymérisables ou photodurcissables, représente un coût non négligeable dans le processus de réalisation de pièces en prototypage rapide. Par ailleurs, en fin de fabrication, les pièces finales sont environnées par de la matière première non transformée. Dans le cas des liquides, la matière première est généralement contenue dans une cuve, et il est aisé d'extraire les pièces de la cuve et de les laisser égoutter. Dans le cas des pâtes, cette opération préalable d'extraction des pièces de leur milieu environnant (pâte non transformée), nécessite en général une action manuelle fastidieuse. Il faut ensuite procéder à une opération de finition du nettoyage, même dans le cas de matières premières liquides. Cette opération consiste en un nettoyage manuel long et fastidieux des pièces réalisées par l'intermédiaire de brosses, ou de pinceaux par exemple et traditionnellement à l'aide de solvants du type alcool, acétone, etc...

Un premier but de la présente est de proposer une composition photopolymérisable nouvelle, destinée à être utilisée dans un procédé de prototypage, permettant de réaliser rapidement des pièces finales de faible coût et/ou de limiter, voire d'éliminer, la phase manuelle de nettoyage.

Ce but est atteint par le fait que la composition selon l'invention est sous forme de mousse et est caractérisée en ce qu'elle comprend :
- une partie liquide ou pâteuse comprenant au moins 35 % en volume de matériau photopolymérisable comprenant au moins une résine photosensible et au moins un photoamorceur et de 0 à 65 % en volume de charge(s) pulvérulente(s) et/ou d'adjuvant(s) et
- une partie gazeuse sous la forme d'une dispersion de gaz dans ladite partie liquide ou pâteuse, le gaz étant sous forme de bulles dans une proportion de 10 à 95 % en volume par rapport au volume de la composition.

Selon une particularité, la composition de mousse comprend des bulles de taille inférieure à 0,3 millimètre dans une proportion d'au moins 30% en volume par rapport au volume totale de bulles.

Avantageusement, la composition de mousse comprend de 30 à 95 % en volume de bulles.

Selon une particularité, la composition est un matériau à seuil.

Dans un mode de réalisation, le gaz est de l'air.

Avantageusement, la composition de mousse comprend un adjuvant de type agent moussant.

Selon une particularité, la composition de mousse comprend une charge pulvérulente à faible résidu de pyrolyse telle qu'une cire micronisée.

L'invention concerne également un procédé d'obtention de pièces tridimensionnelles constituées de fines couches superposées de matière première, obtenues par répétition d'un cycle comprenant une étape de transformation d'une couche venant d'être déposée par photo-polymérisation de la composition et une étape de recouvrement de la couche transformée par une nouvelle couche non transformée, caractérisé en ce que les couches sont réalisées à partir de la composition telle que définie précédemment.

Selon une particularité, le procédé comprend, lors d'au moins un cycle, une étape de réalisation de la composition de mousse par dispersion d'un gaz dans une partie liquide ou pâteuse photopolymérisable ou par détente d'un mélange comprenant un gaz et une partie liquide ou pâteuse photopolymérisable.

Avantageusement, le procédé comprend une étape finale de nettoyage automatique de la pièce tridimensionnelle par application d'un solvant ou immersion dans un solvant.

Un autre but de la présente invention est de proposer un dispositif pour la mise en oeuvre du procédé précité.

Ce but est atteint par le fait que le procédé selon l'invention, comprenant :
- des moyens pour induire la transformation de la matière première dans un champ de travail,
- des moyens d'alimentation en matière première,
- des moyens pour effectuer au moins une phase de recouvrement, lesdits moyens comprenant au moins un racleur et des moyens d'entraînement dudit racleur,
- et des moyens de déplacement des volumes déjà transformés par rapport au champ de travail,
se caractérise par le fait que les moyens d'alimentation comprennent un récipient sous pression contenant la partie liquide ou pâteuse de la composition de mousse et un moyen adapté au récipient permettant la détente de la partie liquide ou pâteuse afin de former une quantité déterminée de composition de mousse pour la réalisation d'une ou plusieurs couches.

Selon une autre particularité, les moyens de déplacement permettent de déplacer les volumes transformés dans un bain de solvant et le dispositif comprend en outre des moyens permettant d'extraire les volumes transformés et nettoyés dudit bain.

La présente invention concerne également les pièces tridimensionnelles obtenues par le procédé précité. Avantageusement lesdites pièces sont utilisées pour servir de modèle dans des procédés de fonderie de type "à cire perdue".

Ainsi, la présente invention prend le contre-pied des méthodes antérieures destinées à limiter la présence de bulles, pour au contraire augmenter au maximum le nombre de bulles, jusqu'à ce que les bulles constituent une part significative du matériau. Comme il devient inévitable que les bulles soient présentes en surface et au coeur des pièces tridimensionnelles obtenues à partir d'une telle composition, appelées ci-après pièces finales, les bulles doivent être de petite taille, de manière à ce que les pièces finales aient visuellement une apparence homogène.

La composition selon l'invention comprend de 10 à 95 %, de préférence de 30 à 95 % en volume par rapport au volume apparent de la composition de bulles dispersées de manière sensiblement homogène. Il est à noter que dans la présente, les différents pourcentages en volume sont déterminés à température ambiante et à pression atmosphérique. De préférence, la composition comprend des bulles de taille moyenne inférieure à 0,3 millimètre, de préférence 0,1mm dans une proportion d'au moins 30%, par exemple de 30 à 90%, de préférence d'au moins 90%, en volume par rapport au volume total de bulles. Avec des bulles de diamètre inférieur à 0,1 mm, on dispose d'une pièce finale dont la qualité de surface est compétitive par rapport à celle obtenue par certains procédés de prototypage rapide à base de frittage de poudre. Bien entendu, la composition selon l'invention peut comprendre des bulles non désirées dont la taille et la proportion correspondent à celles rencontrées dans les compositions liquides ou pâteuse photopolymérisables classiques. Ces bulles non désirées peuvent être à l'origine de défauts à la surface des pièces finales, de l'ordre de la taille desdites bulles, que l'on retrouve sur les pièces finales obtenues à partir de compositions antérieures.

Les bulles peuvent être constituées d'air ou de tout type de gaz tel qu'un gaz neutre par exemple.

La composition de mousse comprend au moins 35 % en volume de la partie non-gazeuse d'un matériau photopolymérisable et de 0 à 65 % en volume de la partie non-gazeuse d'une ou plusieurs charges pulvérulentes et/ou d'un ou plusieurs d'adjuvants. Le matériau photopolymérisable précité désigne une résine photopolymérisable ou un mélange de résines photopolymérisables de fluidités différentes ou similaires, ainsi qu'un système d'amorçage. Les résines utilisées dans la présente invention peuvent être des résines de type acrylique ou époxy telles que celles utilisées dans le prototypage rapide classique à partir de liquide ou pâte Le système d'amorçage comprend un photo-amorceur adapté à la résine utilisée et, éventuellement, un agent activateur qui permet de déplacer la longueur d'onde d'activation du photo-amorceur, qui une fois activé va réagir avec la résine.

La composition peut comprendre tout type de charge pulvérulente minérale, organique, métallique ou céramique traditionnellement utilisée en stéréolithographie. Bien entendu, dans certaines applications, telles que l'utilisation de pièces finales dans des procédés de type à "cire perdue" décrits ci-après, la charge doit présenter un faible résidu après pyrolyse, et doit par conséquent être de nature organique, telle qu'une cire micronisée.

La composition peut comprendre en outre des additifs tel qu'un agent moussant pour faciliter la dispersion du gaz dans la partie liquide ou pâteuse de la composition, et/ou pour la stabiliser par la suite. Cet agent moussant est par exemple un tensioactif, tel que par exemple le produit commercialisé par la société Fisher Scientific sous la dénomination commerciale "Teepol", ou un liquide vaisselle classique, en présence d'eau.

La composition de mousse selon l'invention peut être obtenue à partir d'une pâte ou d'un liquide comprenant un matériau photopolymérisable tel que défini précédemment auquel on ajoute une quantité déterminée de bulles de taille déterminée. La composition peut comprendre ainsi tout type d'additifs utilisés dans les procédés classiques de prototypage rapide, tel que par exemple des diluants permettant de réduire la viscosité du matériau photopolymérisable, un agent rhéologique, un agent augmentant la réactivité de la composition vis-à-vis de l'illumination. Le terme pâte regroupe notamment les matériaux à très forte viscosité, supérieure à 10 000 mPa.s ou les matériaux dits "à seuil marqué" ayant un comportement de type fluide de Bingham. Un matériau "à seuil" est tel qu'il ne s'écoule pas (gradient nul) tant que la contrainte de cisaillement qui lui est appliquée ne dépasse pas une valeur minimale. On dira qu'un matériau présente un "seuil marqué" lorsque la valeur de cette contrainte de cisaillement est supérieure à 20 Newton par mètre carré.

La composition de mousse constitue de préférence un matériau à seuil ou à seuil marqué.

Par rapport à une composition similaire, comprenant un matériau photopolymérisable similaire, mais sans bulles, la composition de mousse selon l'invention présente une densité apparente plus faible, une plus grande opacité à la lumière, et un comportement rhéologique complètement modifié. Bien entendu, les propriétés mécaniques des pièces tridimensionnelles obtenues par prototypage rapide à partir de la composition selon l'invention sont moins bonnes.

Toutefois, les compositions de mousse présentent un plus faible prix de revient des composants par unité de volume. La réalisation de mousse à partir de liquides ou pâtes photosensibles traditionnellement utilisés permet d'augmenter le volume de matière, pratiquement sans en augmenter le coût, le coût de l'insertion de gaz étant marginal. Pour un volume initial de résine fixé, il est possible de réaliser un volume de pièces supérieur, allant jusqu'à un facteur 10 ou plus.

Par ailleurs, le nettoyage des pièces tridimensionnelles réalisées à partir de la composition de mousse est considérablement facilité, par l'augmentation spectaculaire de l'efficacité des solvants classiques. Lorsqu'un solvant classique est utilisé pour nettoyer une pièce environnée par une mousse selon l'invention, en particulier une mousse comprenant au moins 30 % en volume ou plus de gaz, le nettoyage est nettement plus aisé et ne nécessite pratiquement plus d'intervention manuelle. En effet, le solvant disloque très facilement les bulles constituant la mousse, ce qui permet non seulement une dislocation rapide de grands volumes massifs de mousse, mais également une finition du nettoyage particulièrement bonne au voisinage de la surface des pièces, même dans des cavités difficilement accessibles par l'intermédiaire de pinceaux ou de brosses. De plus, pour un volume donné, les solvants sont moins rapidement saturés qu'avec la résine à l'état liquide. Le choix du solvant dépend de la composition chimique du photopolymère utilisé dans la composition, et peut être par exemple de l'isopropanol, de l'acétone, ou même de l'eau dans certains cas.

Une telle facilité de nettoyage permet l'automatisation complète du procédé. Ainsi, les pièces finales peuvent être nettoyées automatiquement par simple application d'un solvant ou immersion dans un solvant. Le nettoyage des pièces ne nécessite aucune action mécanique appliquée directement sur les pièces, au moyen par exemple d'une brosse ou d'un pinceau. Une fois solidifiées, les pièces tridimensionnelles peuvent être plongées dans un bain de solvant, éventuellement un bain de solvant à ultrasons et/ou sous agitation.

Par ailleurs, contrairement aux compositions photopolymérisables antérieures, la composition selon l'invention peut être conditionnée dans des récipients à haute pression, tel que décrit ci-après.

Les compositions selon l'invention ne présentent aucun problème de décantation, contrairement à ce qui est couramment observé dans des résines liquides chargées distribuées commercialement pour la stéréolithographie, telles que par exemple, les résines connues sous les noms commerciaux SOMOS 4100, ou JSR SCR-802. En effet, dans ces résines liquides chargées composées d'une résine et d'un fort taux volumique de charge pulvérulente, la résine et la charge se séparent en deux phases au bout de quelques dizaines de minutes de relaxation, ce qui pose des problèmes à la fois pour le stockage et pour l'utilisation en machine.

Les pièces finales peuvent avantageusement être utilisées dans des procédés de fonderie à cire perdue. Les procédés de fonderie à "cire perdue" consiste à utiliser un modèle qui est recouvert par bains successifs d'une coquille de céramique. Cette coquille de céramique est ensuite séchée, puis l'ensemble modèle + coquille est porté à haute température pour provoquer l'évaporation ou la pyrolyse de la pièce modèle. Ces opérations ont pour but de réaliser un moule en céramique dont la forme interne correspond à celle du modèle initial, de manière à pouvoir couler dans ce moule du métal en fusion, et réaliser une copie en métal du modèle initial. La coquille en céramique est détruite à la fin des opérations pour permettre la récupération de la pièce métallique. Les modèles peuvent être réalisés de manière classique à partir de polystyrène expansé. Lorsqu'on réalise des pièces pleines par prototypage rapide, avec les résines photopolymérisables couramment utilisées dans lesquelles tout le volume est solidifié, il est peu fiable de les employer comme modèle à des fins de fonderie à cire perdue. En effet ces résines ont un coefficient de dilatation thermique important, et risquent de provoquer des fissurations de coquille lors de l'élévation de température, rendant les coquilles résultantes inutilisables. Cependant, si l'on réalise des pièces creuses (la surface de la pièce est solidifiée, ainsi qu'une structure interne formant des cavités) par prototypage, on peut tout de même obtenir de bons résultats en fonderie. En effet, les effets de dilatation thermique se traduisent par des efforts tendant à déformer la pièce (vers son intérieur) plutôt qu'à exercer des actions destructives sur le moule en céramique. Les procédés de réalisation de pièces creuses présentent toutefois quelques inconvénients : pré-traitement informatique complexe, difficultés de nettoyage interne des pièces après réalisation, manque d'homogénéIté locale, fragilité des pièces réalisées, etc...

La composition de mousse selon l'invention permet de réaliser des pièces pleines par procédé classique de prototypage rapide utilisable pour servir de modèle dans des procédés de fonderie "à cire perdue", lesdites pièces présentant une importante proportion volumique de gaz, ce qui permet d'éviter les problèmes de fissures de coquille cités ci-dessus. En effet, la mousse solidifiée par couches successives constituant les pièces, possède des caractéristiques thermo-mécaniques finales similaires à celles de matériaux (par exemple le polystyrène expansé) dont la compatibilité avec les procédés de fonderie "à cire-perdue" a été éprouvée et se comporteront naturellement comme les pièces creuses utilisées traditionnellement en stéréolithographie pour la fonderie à cire perdue. Dans le cadre de cette application, il n'est en effet pas nécessaire que les pièces présentent des propriétés mécaniques excellentes. Par contre, il est nécessaire que le nettoyage de la pièce soit le plus aisé possible, ce que la présence de très nombreuses bulles favorise, en améliorant très significativement l'efficacité des solvants habituels de nettoyage.

L'ensemble des propriétés et avantages précités fait que les mousses selon l'invention répondent, mieux que les pâtes ou les liquides, à un besoin croissant du prototypage rapide qui est d'obtenir très rapidement des pièces à faible coût. De plus, l'emploi de mousses permet d'intégrer facilement la fonction de nettoyage dans les machines de production desdites pièces, rendant ainsi lesdites machines compatibles avec un environnement de bureau.

Tel qu'explicité précédemment, la composition de mousse selon l'invention peut être obtenue à partir d'une pâte photosensible ou d'un liquide photosensible auquel on ajoute une quantité déterminée de bulles. Cette opération de dispersion de bulles de gaz peut s'effectuer par un mélangeur classique équipé de disques émulsifiants, par exemple du type robots ménagers permettant de réaliser de la mayonnaise ou de battre des blancs d'oeufs en neige, ou d'un mélangeur sous air, ou d'un batteur ou simplement manuellement au moyen d'un fouet. La présence d'un agent moussant est bénéfique pour rendre les temps de mélange mécanique raisonnablement courts.

Dans une variante de réalisation, la composition de mousse peut être obtenue en incorporant progressivement dans une pâte ou un liquide photosensible une mousse préalablement formée, constituée d'une dispersion de bulles de gaz dans une solution de surfactif(s).

Cette opération de dispersion peut également être effectuée par détente d'un récipient sous pression contenant une pâte ou un liquide photosensible et un gaz sous pression, de manière similaire aux aérosols de type mousse à raser, distributeurs de crème chantilly rechargeables, ou extincteurs.

Il est bien sûr possible de ne pas essayer d'adapter une résine liquide ou pâteuse déjà existante, et de concevoir directement une résine facile à transformer en mousse. En particulier, dans le cas où on souhaite former et distribuer la mousse dans un récipient sous pression, à l'instar de mousses distribuées à grande échelle dans le public (mousses cosmétiques), ou bien de façon industrielle (mousses d'injection, par exemple pour sièges de voiture), il est avantageux de diminuer le plus possible la viscosité de la résine photosensible.

Selon la rhéologie de la composition de mousse, le prototypage s'effectuera avec les machines de stéréolithographie liquide ou avec les machines dites à pâte. La mise en forme d'un produit tridimensionnel composite à partir d'une composition de mousse à seuil marqué, de type pâte, peut être effectuée par une machine de prototypage (de type "Optoform") avec des couches d'épaisseur égale à 100 µm telle que celle décrite dans la demande de brevet français N° 99 02719 déposée par la demanderesse. La mise en forme d'un produit tridimensionnel est obtenue par le dépôt au moyen d'un racleur et la polymérisation au moyen d'une illumination de fines couches de pâte superposées. Pour l'alimentation des machines en matière, il est possible de remplir les pistons d'alimentation de la machine à pâte précitée prévus pour de la pâte avec de la mousse préalablement préparée mécaniquement. Des adaptations peuvent être à prévoir au niveau du racleur, pour ne pas casser l'émulsion, en réduisant au maximum les contraintes de cisaillement, par exemple en faisant fonctionner les rouleurs des racleurs de manière à ce que le boudin de matière roule sans glisser à la vitesse d'avancement du racleur. La mousse préalablement préparée peut également être stockée dans un récipient, puis pompée au cours du fonctionnement de la machine.

Dans un autre mode de réalisation, l'alimentation en matière première peut être effectuée par l'intermédiaire d'un récipient sous pression, éventuellement rechargeable, contenant le matériau photopolymérisable, de préférence un agent moussant et éventuellement les charges et adjuvants appropriés ainsi qu'un gaz sous pression. Le récipient sous pression est muni d'une tête de distribution adaptée permettant de former et de distribuer la mousse. Dans ces conditions, il n'est pas nécessaire d'utiliser une pompe, la pression du gaz permettant une distribution de mousse. Il peut être prévu une cavité ou chambre d'expansion dans laquelle se fera la détente du matériau. Cette cavité se comporte alors exactement comme la chemise d'un piston normal d'alimentation prévu pour de la pâte, à ceci près que pour alimenter le racleur en matériau, il faut détendre le récipient durant un certain temps, au lieu de monter le piston d'une certaine distance. Le contrôle de la distribution de matière peut être effectué par exemple par la commande de la tête distributrice par un système informatique. Ce mode de réalisation permet de produire une quantité de mousse déterminée correspondant à la quantité nécessaire pour réaliser un nombre déterminé de couches. On peut prévoir des capteurs indiquant l'épuisement de la matière contenue dans le récipient sous pression, lesdits capteurs étant reliés au système de commande de la machine pour permettre un arrêt automatique de la machine en cas de carence en matière première, et indiquer à l'utilisateur, par un signal sonore par exemple, la nécessité de remplacer le récipient épuisé par un récipient neuf.

Dans une variante de réalisation, l'alimentation en matière première est effectuée à partir d'un récipient muni d'une tête distributrice et apte à être alimenté d'une part par une pâte ou un liquide photopolymérisable à partir d'un piston par exemple, et d'autre part par un gaz sous pression provenant d'un second récipient ou d'un réseau de gaz indépendant. Ledit récipient peut posséder un volume interne correspondant à la quantité de pâte ou de liquide et de gaz nécessaire pour la réalisation d'une couche ou de plusieurs couches, le récipient étant rempli automatiquement en gaz et en pâte ou liquide. Ainsi, une quantité de mousse fraîche peut être formée au fur et à mesure dans le but de réaliser une ou plusieurs couches. Dans ce dernier cas, la mousse formée à la sortie du récipient peut être stockée dans un piston destiné à alimenter le racleur en mousse.

L'invention sera mieux comprise, et d'autres buts, détails, caractéristiques et avantages apparaîtront plus clairement au cours de la description explicative détaillée qui va suivre de deux modes de réalisation particuliers.

### EXEMPLE 1

Dans cet exemple, la composition de mousse est réalisée à partir des composés suivants :
- résine acrylique commercialisée par la société AKZO Chemicals sous la dénomination commerciale "Diacryl 101"
- photoamorceur commercialisé par la société Ciba-Geigy sous la dénomination commerciale "Irgacure 651" (Diméthoxyphénylacétophénone)
- agent moussant :
   - tensioactif sous forme de poudre : sodium dodécyl sulfate (C₁₂H₂₅NaSO₄)
   - eau.

On incorpore 2,5 % en poids de photoamorceur dans la résine acrylique, de préférence à chaud, par exemple à une température comprise entre 40 et 50°C. On incorpore ensuite 5 % en poids de tensioactif dans le mélange résine-photoamorceur obtenu précédemment. On incorpore ensuite progressivement environ 30 % en poids d'eau dans le mélange obtenu, tout en agitant vigoureusement au moyen d'un fouet ou d'un batteur de type électroménager.

On obtient une mousse très aérée, épaisse, qui possède un seuil d'écoulement faible permettant son utilisation dans des procédés de prototypage avec des machines classiques de stéréolithographie liquide. La composition de mousse a une densité d'environ 0,35, soit une teneur en gaz de l'ordre de 65 % en volume (volume initial de la résine multiplié par 3). La composition de mousse se dissout extrêmement rapidement dans l'acétone et l'isopropanol. La composition de mousse possède une réactivité relativement faible aux ultraviolets et les pièces tridimensionnelles obtenues à partir de cette composition de mousse présentent des propriétés mécaniques très faibles.

### EXEMPLE 2

A partir de la composition de mousse de l'exemple 1, on ajoute progressivement, tout en agitant vigoureusement au moyen d'un batteur, environ 70 g d'un mélange de résine acrylique précitée et de photoamorceur précité pour 100 grammes de composition de mousse de l'exemple 1. On obtient une composition de mousse moins aérée que dans l'exemple 1, possédant un seuil d'écoulement suffisant (matériau à seuil) pour être utilisée avec une machine à pâte, telle qu'une machine de type "Optoform" mentionnée précédemment. La composition de mousse a une densité d'environ 0,75, soit une teneur en gaz de l'ordre de 25 % en volume. Un volume de quelques centimètres cubes de la composition de mousse se dissout en quelques dizaines de secondes dans l'acétone et quelques minutes dans l'isopropanol. La réactivité aux ultraviolets de la composition de mousse ainsi que les propriétés mécaniques des pièces tridimensionnelles obtenues à partir de cette composition de mousse sont meilleures que celles de l'exemple 1. De plus, la stabilité dans le temps et l'homogénéité de la composition sont meilleures que celles de la composition de l'exemple 1.

Bien que l'invention ait été décrite en liaison avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention

## Revendications

1. Composition de mousse photopolymérisable destinée à être utilisée dans un procédé de prototypage, **caractérisée en ce qu'**elle comprend :
- une partie liquide ou pâteuse comprenant au moins 35 % en volume de matériau photopolymérisable comprenant au moins une résine photosensible et au moins un photoamorceur et de 0 à 65 % en volume de charge(s) pulvérulente(s) et/ou d'adjuvant(s) et
- une partie gazeuse sous la forme d'une dispersion de gaz dans ladite partie liquide ou pâteuse, le gaz étant sous forme de bulles dans une proportion de 10 à 95 % en volume par rapport au volume de la composition.

2. Composition selon la revendication 1, **caractérisé en ce qu'**elle comprend des bulles de taille inférieure à 0,3 millimètre dans une proportion d'au moins 30% en volume par rapport au volume total de bulles.

3. Composition selon l'une des revendications 1 ou 2, **caractérisée en ce qu'**elle comprend de 30 à 95 % en volume de bulles.

4. Composition selon l'une des revendications précédentes, **caractérisée en ce que** la composition est un matériau à seuil.

5. Composition selon l'une des revendications précédentes, **caractérisée en ce que** le gaz est de l'air.

6. Composition selon l'une des revendications précédentes, **caractérisée en ce qu'**elle comprend un adjuvant de type agent moussant.

7. Composition selon l'une des revendications précédentes, **caractérisée en ce qu'**elle comprend une charge pulvérulente à faible résidu de pyrolyse telle qu'une cire micronisée.

8. Procédé d'obtention de pièces tridimensionnelles constituées de fines couches superposées de matière première, obtenues par répétition d'un cycle comprenant une étape de transformation d'une couche venant d'être déposée par photo-polymérisation de la composition et une étape de recouvrement de la couche transformée par une nouvelle couche non transformée, **caractérisé en ce que** les couches sont réalisées à partir de la composition selon l'une des revendications 1 à 7.

9. Procédé selon la revendication 8, **caractérisé en ce qu'**il comprend lors d'au moins un cycle, une étape de réalisation de la composition de mousse par dispersion d'un gaz dans une partie liquide ou pâteuse photopolymérisable ou par détente d'un mélange comprenant un gaz et une partie liquide ou pâteuse photopolymérisable.

10. Procédé selon la revendication 8 ou 9, **caractérisé en ce qu'**il comprend une étape finale de nettoyage automatique de la pièce tridimensionnelle par application d'un solvant ou immersion dans un solvant.

11. Dispositif pour la mise en oeuvre du procédé selon l'une des revendications 8 à 10 comprenant :
- des moyens pour induire la transformation de la matière première dans un champ de travail,
- des moyens d'alimentation en matière première,
- des moyens pour effectuer au moins une phase de recouvrement, lesdits moyens comprenant au moins un racleur et des moyens de guidage et d'entraînement dudit racleur,
- et des moyens de déplacement des volumes déjà transformés par rapport au champ de travail,
**caractérisé en ce que** les moyens d'alimentation comprennent un récipient sous pression contenant la partie liquide ou pâteuse de la composition de mousse et un moyen adapté au récipient permettant la détente de la partie liquide ou pâteuse afin de former une quantité déterminée de composition de mousse pour la réalisation d'une ou plusieurs couches.

12. Dispositif selon la revendication 11, **caractérisé en ce que** les moyens de déplacement permettent de déplacer les volumes transformés dans un bain de solvant et qu'il comprend en outre des moyens permettant d'extraire les volumes transformés et nettoyés dudit bain.

13. Pièces tridimensionnelles obtenues par le procédé selon l'une des revendications 8 à 10.

14. Utilisation d'une pièce tridimensionnelle selon la revendication 13 pour servir de modèle dans des procédés de fonderie de type "à cire perdue".
